# EUROPÄISCHE PATENTSCHRIFT

(11) **EP 2 890 913 B1**
(45) Veröffentlichungstag und Bekanntmachung des Hinweises auf die Patenterteilung: **12.10.2016**
(21) Anmeldenummer: 13762742.8
(22) Anmeldetag: 27.08.2013
(51) Int. Cl.: F16D 13/75

(54) **NACHSTELLEINRICHTUNG FÜR EINE REIBUNGSKUPPLUNG**
READJUSTING DEVICE FOR A FRICTION CLUTCH
DISPOSITIF DE RÉGLAGE POUR EMBRAYAGE À FRICTION

(30) Priorität: 28.08.2012 DE 102012215200
(43) Veröffentlichungstag der Anmeldung: 08.07.2015
(73) Patentinhaber: Schaeffler Technologies AG & Co. KG, 91074 Herzogenaurach (DE)
(72) Erfinder: WILLIG, Loic, F-67240 Bischwiller (FR); AHNERT, Gerd, 77880 Sasbach (DE)
(86) Internationale Anmeldenummer: PCT/DE2013/200139
(87) Internationale Veröffentlichungsnummer: WO 2014/032667

(56) Entgegenhaltungen:
- DE-A1-102009 035 225
- DE-A1-102011 081 232
- DE-A1-102011 101 557

## Beschreibung

Die Erfindung betrifft eine Nachstelleinrichtung für eine Reibungskupplung für ein Kraftfahrzeug, mit dessen Hilfe ein verschleißbedingter Fehlabstand einer Anpressplatte zu einer Gegenplatte der Reibungskupplung nachgestellt werden kann.

Reibungskupplungen können zum Ausgleich eines auftretenden Verschleißes von Reibbelägen mit einer kraftgesteuerten Nachstelleinrichtung versehen sein. Hier wird eine infolge eines Verschleißes ungünstige Entwicklung der Anpresskraft eines eine Gegenplatte der Reibungskupplung beaufschlagenden Betätigungssystems zur Bewegung der Anpressplatte, beispielsweise einer Tellerfeder, erfasst und abhängig von der Anpresskraft eine Nachstellung bewirkt. Alternativ kann ein bei einem Verschleiß der Reibbeläge der Kupplungsscheibe auftretender Fehlabstand zwischen dem Kupplungsgehäuse und dem Betätigungssystem ermittelt ("sensieren") und abhängig von dem Fehlabstand korrigiert werden. Zur Korrektur werden dabei zwischen der Gegenplatte und dem Betätigungssystem angeordnete Ausgleichsmittel wie Rampensysteme oder Gewinde verdreht.

Aus DE 10 2009 035 225 A1, WO 2009/056092 A1 und DE 10 2011 081 232 A1 ist jeweils eine Reibungskupplung mit einer weggesteuerten Nachstelleinrichtung bekannt, bei der eine sich in Abhängigkeit vom Abstand eines Betätigungssystems mit einer Tellerfeder und einer Anpressplatte axial verlagernde Antriebsklinke eines Sensierblechs auf ein Ritzel einer Spindel wirkt, wobei eine auf der Spindel aufgenommene Spindelmutter bei Verdrehung der Spindel einen zwischen der Anpressplatte und der Tellerfeder angeordneten Rampenring eines Rampensystems relativ zu einer Gegenrampe der Anpressplatte verdreht, wodurch der ursprüngliche Abstand des Betätigungssystems zur Anpressplatte wieder hergestellt wird. Dabei gleitet während des Hubs einer Gegenplatte gegenüber der Anpressplatte die Antriebsklinke auf den Zähnen des Ritzels und rastet bei einem vorgegebenen Verschleiß in eine Zahnlücke zwischen zwei Zähnen ein. Die Antriebsklinke nimmt beim nächsten Öffnungsvorgang der Reibungskupplung das Ritzel formschlüssig mit und verdreht dabei das Ritzel und damit die Spindel, wodurch die Spindelmutter entlang der Spindel bewegt wird und den Rampenring um einen entsprechenden Winkelbetrag verdreht, um die Reibungskupplung dadurch nachzustellen.

Es besteht ein ständiges Bedürfnis, das maximal übertragbare Drehmoment mit Hilfe einer Einstellung der Anpresskraft einzustellen. Es ist die Aufgabe der Erfindung eine Nachstelleinrichtung für eine Reibungskupplung eines Kraftfahrzeugs zu schaffen, mit dessen Hilfe eine Reduzierung des Risikos eines Kupplungsrutschens ermöglicht ist.

Die Lösung der Aufgabe erfolgt erfindungsgemäß durch eine Nachstelleinrichtung mit den Merkmalen des Anspruchs 1. Bevorzugte Ausgestaltungen der Erfindung sind in den Unteransprüchen angegeben, die jeweils einzeln oder in Kombination einen Aspekt der Erfindung darstellen können.

Erfindungsgemäß ist eine Nachstelleinrichtung für eine Reibungskupplung eines Kraftfahrzeugs vorgesehen mit einer drehbar gelagerten Spindel, einem drehfest mit der Spindel verbundenen Antriebsritzel zum Verdrehen der Spindel bei einem Eingriff in eine Umfangsverzahnung des Antriebsritzel durch eine Antriebsklinke und einer von der Spindel relativ zur Spindel in axialer Richtung antreibbaren Verstelleinheit zum Verdrehen eines Nachstellrings zur Nachstellung eines verschließbedingten Fehlabstands zwischen einer Anpressplatte und einer Gegenplatte der Reibungskupplung, wobei die Verstelleinheit ein von der Spindel antreibbares Nachstellritzel und ein in eine Umfangsverzahnung des Nachstellritzels eingreifende Rückstellklinke zur Rückdrehung des Nachstellritzels entlang der Spindel aufweist.

Im Vergleich zu einem Spindel/Mutter-System ist bei der Nachstelleinrichtung mit Hilfe der Verstelleinheit die Mutter durch das Nachstellritzel ersetzt, in das die Rückstellklinke eingreifen kann. Wenn bei einem hinreichend großen Verschleiß die Antriebsklinke in einen nachfolgenden Zahnzwischenraum der Umfangsverzahnung des Antriebsritzels springen kann, kann bei einer nachfolgenden Hubbewegung der Anpressplatte die Antriebsklinke das Antriebsritzel und damit die Spindel verdrehen, so dass das in der Art einer Spindelmutter auf der Spindel aufgeschraubte Nachstellritzel entlang der Spindel axial bewegt werden kann, um den Nachstellring zu verdrehen. Wenn nicht genug Drehmoment übertragt wird, kann ein Sensor diese Situation sensieren und einen Überweg vom Ausrücklager auslösen, und somit kann die Rückstellklinke in einen nachfolgenden Zahnzwischenraum der Umfangsverzahnung des Nachstellritzels gelangen und bei der nachfolgenden Hubbewegung der Anpressplatte das Nachstellritzel relativ zur Spindel verdrehen, so dass das Nachstellritzel entgegen der von der Antriebsklinke ausgelösten axialen Nachstellrichtung in einer axialen Rückstellrichtung entlang der Spindel bewegt wird. Bei einem aktiven Überweg des Ausrücklagers kann die in das Nachstellritzel eingreifende Rückstellklinke das Nachstellritzel entgegen der Nachstellrichtung relativ zur Spindel verdrehen und dadurch eine von der Antriebsklinke ausgelöste Nachstellung zumindest teilweise rückgängig machen, so dass eine Erhöhung der Anpresskraft und eine Erhöhung des maximal übertragbaren Drehmoments ermöglicht ist.

In einer bevorzugten Ausführungsform der Nachstelleinrichtung können sich die folgenden Betriebssituationen ergeben: Wenn kein ausreichender Verschleiß für eine Nachstellung vorliegt kann die Antriebsklinke und die Rückstellklinke innerhalb ihres jeweiligen Zahnzwischenraums vor- und zurückbewegt werden, ohne dass die Spindel oder das Nachstellritzel bei einem Schließen oder Öffnen der Reibungskupplung verdreht wird. Bei einem hinreichenden Verschleiß von zwischen der Anpressplatte und der Gegenplatte vorgesehenen Reibbelägen überstreicht die Anpressplatte einen entsprechend größer werdenden Hubweg, der so groß ist, dass die Antriebsklinke in einen nachfolgenden Zahnzwischenraum des Antriebsritzels gelangen kann. Die Rückstellklinke springt dabei nicht in einen nachfolgenden Zahnzwischenraum. Dies führt dazu, dass bei einem nachfolgenden Öffnen der Reibungskupplung die Antriebsklinke das Antriebsritzel und damit die Spindel verdreht. Die Spindel wiederum bewegt das Nachstellritzel in axialer Richtung entlang der Spindel, so dass das Nachstellritzel den Nachstellring verdrehen kann, der über ein Rampensystem den im Wesentlichen ursprünglichen Hubweg für die Anpressplatte wiederherstellt. Nach diesem Nachstellvorgang bewegen sich die Antriebsklinke und die Rückstellklinke wieder innerhalb des jeweiligen Zahnzwischenraums bei einer Betätigung der Reibungskupplung hin- und her bis wieder ein hinreichender Verschleiß sensiert wird. Wenn ein Überweg vom Ausrücklager ausgelöst wird, ist es möglich, dass die Rückstellklinke in einen nachfolgenden Zahnzwischenraum springt. Bei der Öffnungsbewegung der Anpressplatte kann die Rückstellklinke das Nachstellritzel relativ zur Spindel verdrehen und das Nachstellritzel entgegen der Nachstellrichtung zurück bewegen, wodurch die Anpresskraft erhöhen werden kann.

Insbesondere ist es möglich mit Hilfe der Rückstellklinke eine maximal mögliche Nachstellbewegung pro Nachstellvorgang vorzusehen. Das Ausmaß der pro Nachstellvorgang maximal möglichen Nachstellbewegung kann insbesondere über einen Differenzhubweg eingestellt werden, den die Anpressplatte zusätzlich überstreichen muss, nachdem die Antriebsklinke in einen nachfolgenden Zahnzwischenraum gesprungen ist, damit auch die Rückstellklinke in einen nachfolgenden Zahnzwischenraum springt. Dies kann beispielsweise durch unterschiedliche Dimensionierungen der Zähnezahl und/oder des Durchmessers für das Antriebsritzel und für das Nachstellritzel oder durch unterschiedliche Übersetzungen der Hubbewegung der Anpressplatte relativ zur Gegenplatte oder relativ zu einem Kupplungsdeckel der Reibungskupplung auf die Antriebsklinke und die Rückstellklinke, beispielsweise durch unterschiedliche Eingreifwinkel relativ zur Axialrichtung für die Antriebsklinke und die Rückstellklinke, erreicht werden.

Die Antriebsklinke und/oder die Rückstellklinke können mit einem mit der Gegenplatte verbundenen Kupplungsdeckel verbunden sein, so dass die beispielsweise mit Hilfe eines Halters mit der Anpressplatte befestigte Spindel bei einem Verlagern der Anpressplatte eine Relativbewegung zu der Antriebsklinke und/oder der Rückstellklinke ausführen kann. Die Antriebsklinke und/oder die Rückstellklinke sind vorzugsweise aus einem Metallblech hergestellt. Die Spindel kann in dem Halter drehbar gelagert sein. Das Antriebsritzel kann beispielsweise über korrespondierende formschlüssige Konturierungen drehfest mit der Spindel verbunden sein, wobei das Antriebsritzel insbesondere axial auf die Spindel aufgesteckt werden kann. Das Nachstellritzel kann in der Art einer Spindelmutter ein Innengewinde aufweisen, über welches das Nachstellritzel auf die Spindel aufgeschraubt und bei einer Drehung der Spindel entlang der Spindel bewegt werden kann. Der Nachstellring weist beispielsweise eine Rampe auf, die an einer von der Anpressplatte ausgebildeten Gegenrampe abgleiten kann, so dass sich bei einer Relativdrehung des Nachstellrings zur Anpressplatte die axiale Gesamterstreckung erhöht. Die Betätigungskinematik einer an einer von der Anpressplatte wegweisenden Kontaktfläche des Nachstellrings angreifenden Betätigungselements, insbesondere eine hydraulisch betätigbare Hebelfeder, bleibt dadurch über den Verschleißbereich der Reibungskupplung im Wesentlichen konstant.

Insbesondere ist die Rückstellklinke an der Spindel und/oder an dem Nachstellritzel relativ verdrehbar gelagert. Die Rückstellklinke kann beispielsweise von einem Nachstellhalter abstehen, der das Nachstellritzel U-förmig an den Stirnseiten umgreift und an dem Nachstellritzel und/oder an der Spindel drehbar gelagert ist. Der Nachstellhalter wiederum kann beispielsweise von dem Kupplungsdeckel bei einer Relativbewegung der Anpressplatte zum Kupplungsdeckel verschwenkt werden, so dass die Rückstellklinke zu der Umfangsverzahnung des Nachstellritzels eine Relativbewegung ausführen kann. Durch die drehbare Lagerung der Rückstellklinke an dem Nachstellritzel und/oder an der Spindel bleibt die Eingriffskinematik der Rückstellklinke in die Umfangsverzahnung des Nachstellritzels zwischen zwei Nachstellvorgängen im Wesentlichen konstant.

Vorzugsweise weist die Rückstellklinke ein Halteelement zur Befestigung mit einem Kupplungsdeckel der Reibungskupplung auf. Die Rückstellklinke kann insbesondere über einen von einem drehbar mit der Spindel und/oder mit dem Nachstellritzel drehbar gelagerten Nachstellhalter abstehen, um in die Umfangsverzahnung des Nachstellritzels eingreifen zu können. Das Halteelement kann als ein von dem Nachstellhalter abstehender Ansatz ausgebildet sein, über den eine Relativbewegung des Kupplungsdeckels zum Nachstellritzel insbesondere über den Nachstellhalter an die Rückstellklinke übertragen werden kann. Das Halteelement kann beispielsweise in einen korrespondierenden Schlitz des Kupplungsdeckels eingesetzt sein, um die Relativbewegung des Kupplungsdeckels zum Nachstellritzel an die Rückstellklinke übertragen zu können.

Besonders bevorzugt ist mit dem Nachstellritzel ein Nachstellansatz zur Befestigung mit dem Nachstellring relativ verdrehbar verbunden, wobei der Nachstellansatz von dem Nachstellritzel in axialer Richtung zum Verdrehen des Nachstellrings antreibbar ist. Der Nachstellansatz kann insbesondere derart formschlüssig mit dem Nachstellring verbunden sein, dass der Nachstellring bei einer Bewegung des Nachstellritzels und des Nachstellansatz in tangentialer Richtung über den gesamten Verstellweg der Nachstelleinrichtung eine Drehung des Nachstellrings auslösen kann. Der Nachstellansatz ist hierzu beispielsweise über ein Kugelkopfgelenk mit dem Nachstellring verbunden. Der Nachstellansatz kann beispielsweise das Nachstellritzel U-förmig an den Stirnseiten umgreifen, so dass das Nachstellritzel sowohl bei einer Bewegung in die Nachstellrichtung als auch bei einer Bewegung in einer der Nachstellrichtung entgegen gesetzten Rückstellrichtung den Nachstellansatz mitnehmen kann. Zwischen dem Nachstellritzel und der jeweiligen Stirnseite des Nachstellritzels zugeordneten Schenkel des U-förmigen zum Nachstellritzel weisenden Teils des Nachstellansatzes kann insbesondere eine Spielpassung vorgesehen sein.

Insbesondere ist eine in die Umfangsverzahnung des Nachstellritzels eingreifende Nachstellsperrklinke zum Sperren einer Relativdrehung des Nachstellritzels zur Spindel bei einer Axialbewegung in Nachstellrichtung vorgesehen, wobei insbesondere sich die Nachstellsperrklinke im Wesentlichen parallel zur Spindel über den gesamten axialen Verstellweg des Nachstellritzels erstreckt. Die Nachstellsperrklinke ist insbesondere mit der Anpressplatte verbunden. Durch die Nachstellsperrklinke kann verhindert werden, dass bei einer durch die Antriebsklinke eingeleiteten Drehung der Spindel das Nachstellritzel mitdreht anstatt entlang der Spindel axial verlagert zu werden. Mit Hilfe der Nachstellsperrklinke ist es nicht erforderlich eine entsprechende Sperrung des Nachstellritzels durch die Rückstellklinke umzusetzen. Insbesondere kann vermieden werden, dass die mit Federkraft an der Umfangsverzahnung des Nachstellritzels anliegende Rückstellklinke das Nachstellritzel reibschlüssig in Nachstellrichtung mitnehmen kann. Unnötige Nachstellbewegungen der Nachstelleinrichtung können dadurch vermieden werden.

Vorzugsweise ist die Spindel gegen eine entgegen einer durch die Antriebsklinke ausgelöste Nachstelldrehrichtung weisende Rückstelldrehrichtung gesichert, wobei insbesondere eine in die Umfangsverzahnung des Antriebsritzels eingreifende Antriebssperrklinke zum Sperren einer Drehung des Antriebsritzels in die Rückstelldrehrichtung vorgesehen ist. Dadurch kann insbesondere vermieden werden, dass die mit Federkraft an der Umfangsverzahnung des Antriebsritzels anliegende Antriebsklinke das Antriebsritzel reibschlüssig in Nachstellrichtung mitnehmen kann. Unnötige Nachstellbewegungen der Nachstelleinrichtung können dadurch vermieden werden. Die Spindel kann beispielsweise über einen Freilauf drehbar gelagert sein, wobei der Freilauf eine Drehung der Spindel in Nachstelldrehrichtung zulässt und in Rückstelldrehrichtung sperrt. Vorzugsweise ist der Feilauf durch die Antriebssperrklinke ersetzt, so dass sich ein einfacher Aufbau für die Nachstelleinrichtung ergibt. Die Antriebssperrklinke ist insbesondere mit der Anpressplatte verbunden.

Besonders bevorzugt sind die Nachstellsperrklinke und die Antriebssperrklinke einstückig ausgeführt sind. Dadurch ist nur ein Bauteil erforderlich, um sowohl die Nachstellsperrklinke und die Antriebssperrklinke auszubilden. Besonders bevorzugt sind die Nachstellsperrklinke und die Antriebssperrklinke einstückig mit einem Halter ausgebildet, über den die Spindel gelagert ist.

Insbesondere ist das Nachstellritzel selbsthemmend von der Spindel aufgenommen. Dadurch kann vermieden werden, dass das Nachstellritzel entgegen der Nachstellrichtung und/oder in Nachstellrichtung beispielsweise aufgrund von Stößen und/oder Vibrationen unbeabsichtigt bewegt wird. Das Risiko eines unabsichtlichen Nachstellens wird dadurch reduziert.

Vorzugsweise weist das Nachstellritzel eine von einer Zahnteilung des Antriebsritzels verschiedene Zahnteilung auf, wobei insbesondere die Zahnteilung des Nachstellritzels kleiner als die Zahnteilung des Antriebsritzels ist. Dies kann beispielsweise durch unterschiedliche Dimensionierungen der Zähnezahl und/oder des Durchmessers für das Antriebsritzel und für das Nachstellritzel erreicht werden. Durch die unterschiedliche Zahnteilung können die Antriebsklinke und die Rückstellklinke zu unterschiedlichen Zeitpunkten und/oder bei unterschiedlichen Relativstellungen der Anpressplatte zum Kupplungsdeckel einen Zahnzwischenraum in der Umfangsverzahnung weiter springen, so dass gleichzeitig ein Nachstellen ermöglicht und das maximale Ausmaß des Nachstellens begrenzt werden kann.

Die Erfindung betrifft ferner eine Reibungskupplung, insbesondere zum Kuppeln einer Antriebswelle eines Kraftfahrzeugmotors mit mindestens einer Getriebeeingangswelle eines Kraftfahrzeuggetriebes, mit einer Gegenplatte, einer relativ zu der Gegenplatte verlagerbaren Anpressplatte zum reibschlüssigen Verpressen einer Kupplungsscheibe zwischen der Gegenplatte und der Anpressplatte, einen mit der Gegenplatte verbundenen Kupplungsdeckel zum Abdecken zumindest eines Teils der Reibungskupplung und einer Nachstelleinrichtung, die wie vorstehend beschrieben aus- und weitergebildet sein kann, zur Nachstellung eines verschließbedingten Fehlabstands zwischen der Anpressplatte und der Gegenplatte, wobei insbesondere die Spindel mit der Anpressplatte und die Antriebsklinke sowie die Rückstellklinke mit dem Kupplungsdeckel verbunden sind. Bei einem aktiven Überweg des Ausrücklagers kann die in das Nachstellritzel eingreifende Rückstellklinke das Nachstellritzel entgegen der Nachstellrichtung relativ zur Spindel verdrehen und dadurch eine von der Antriebsklinke ausgelöste Nachstellung zumindest teilweise rückgängig machen, so dass eine Erhöhung der Anpresskraft und eine Erhöhung des maximalen übertragbaren Drehmoments ermöglicht ist.

Die Reibungskupplung kann im Übrigen wie in DE 10 2009 035 225 A1 oder
WO 2009/056092 A1 dargestellt aus- und weitergebildet sein, auf deren Inhalt als Teil der Erfindung hiermit Bezug genommen wird.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig.1:: eine schematische Draufsicht eines Teils einer Reibungskupplung mit einer Nachstelleinrichtung,
- Fig. 2:: eine schematische Schnittansicht durch ein Nachstellritzel der Nachstelleinrichtung aus Fig. 1 und
- Fig. 3:: eine schematische Schnittansicht durch ein Antriebsritzel der Nachstelleinrichtung aus Fig. 1.

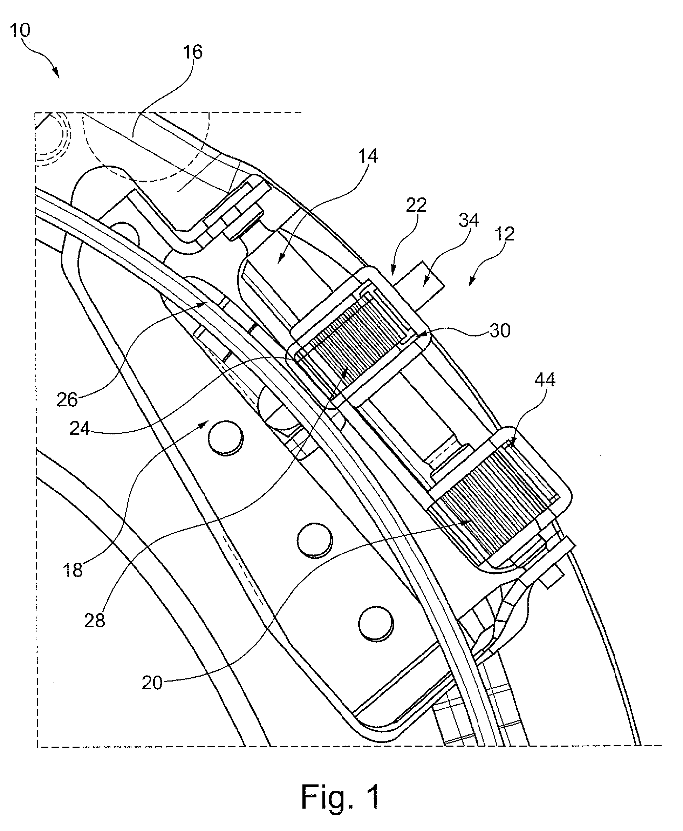

Die In Fig. 1 dargestellte Reibungskupplung 10 weist eine Nachstelleinrichtung 12 auf. Die Nachstelleinrichtung 12 weist eine Spindel 14 auf, die in einem mit einer Anpressplatte 16 der Reibungskupplung verbundenen Halter 18 drehbar gelagert ist. Mit der Spindel 14 ist ein Antriebsritzel 20 drehfest verbunden. Wenn das Antriebsritzel 20 verdreht wird, dreht die Spindel 14 mit und kann eine in der Art einer Spindelmutter aufgenommene Verstelleinheit 22 entlang der Spindel 14 axial bewegen. Die Verstelleinheit 22 weist einen Nachstellansatz 24 auf, mit dessen Hilfe bei einer axialen Bewegung der Verstelleinheit 22 entlang der Spindel 14 ein Nachstellring 26 relativ zu der Anpressplatte 16 verdreht werden kann. Die Verstelleinheit 22 weist ferner ein Nachstellritzel 28 auf, das von dem Nachstellansatz 24 U-förmig umgriffen wird, wobei der Nachstellansatz 24 an der Spindel 14 relativ drehbar gelagert sein kann. Bei einer Bewegung der Verstelleinheit 22 entlang der Spindel 14 schlägt das Nachstellritzel 28 an dem Nachstellansatz 24 an, um den Nachstellring 26 relativ zur Anpressplatte 16 zu verdrehen.

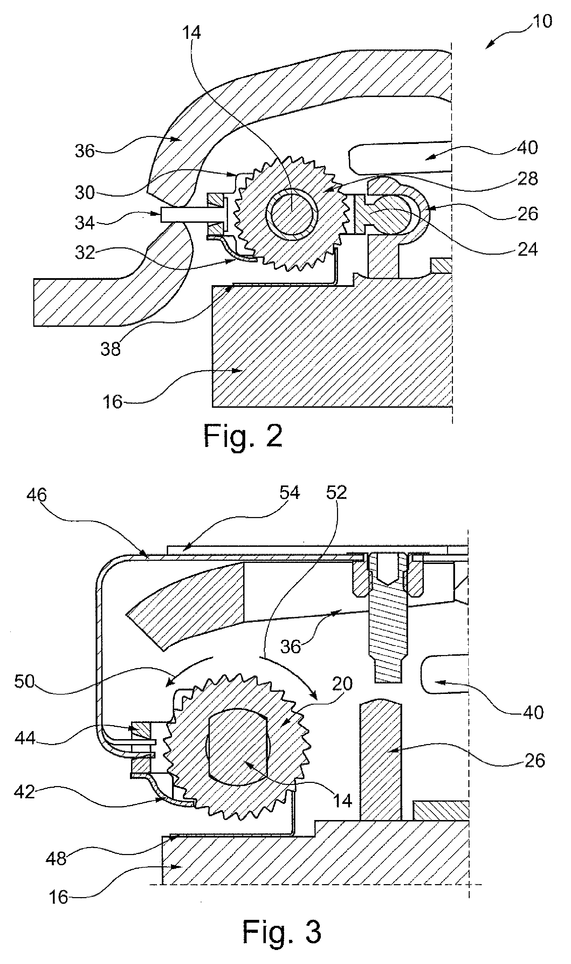

Wie insbesondere in Fig. 2 dargestellt, weist die Verstelleinheit 22 einen Nachstellhalter 30 auf, der an der Spindel 14 relativ drehbar gelagert sein kann und mit einer Rückstellklinke 32 verbunden ist, die in eine Umfangsverzahnung des Nachstellritzels 28 eingreifen kann. Von dem Nachstellhalter 30 steht ein Halteelement 34 ab, das mit einem Kupplungsdeckel 36 der Reibungskupplung 10 verbunden sein kann, so dass bei einem Relativhub der Anpressplatte 16 zum Kupplungsdeckel 36 der Nachstellhalter 30 gemeinsam mit der Rückstellklinke 32 relativ zum Nachstellritzel 28 verschwenkt werden kann. Wenn die Anpressplatte 16 infolge eines überstrichenen Überwegs, kann die Rückstellklinke 32 in einen nachfolgenden Zahnzwischenraum der Umfangsverzahnung des Nachstellritzels 28 springen und bei einem Öffnen der Reibungskupplung 10 das Nachstellritzel 28 auf der Spindel entgegen einer Nachstellrichtung verdrehen. Damit das insbesondere selbsthemmend auf der Spindel 14 aufgenommene Nachstellritzel 28 bei einer Drehung der Spindel 14 für ein Nachstellen des Nachstellrings 26 nicht mitdreht, ist mit der Anpressplatte 16 eine Nachstellsperrklinke 38 verbunden, die in die Umfangsverzahnung des Nachstellritzels 28 eingreift. Zum Schließen der Reibungskupplung 10 kann ein als Hebelfeder, insbesondere in der Art einer Tellerfeder, ausgestaltetes Betätigungselement 40 mittelbar über den Nachstellring 16 eine Betätigungskraft auf die Anpressplatte 16 ausüben, wobei der Schwenkweg des Betätigungselement 40 über den Verschleißbereich der Reibungskupplung 10 durch das Nachstellen der Nachstelleinrichtung 12 im Wesentlichen konstant bleibt.

Wie in Fig. 3 dargestellt, kann in die Umfangsverzahnung des Antriebsritzels 20 eine Antriebsklinke 42 eingreifen, die von einem an der Spindel 14 relativ drehbar gelagerten Antriebshalter 44 absteht. Der Antriebshalter 44 kann von einem mit dem Kupplungsdeckel 36 verbundenen Sensierblech 46 bei einem Relativhub der Anpressplatte 16 zum Kupplungsdeckel 36 verschwenkt werden. Bei einem hinreichend großen verschleißbedingten Relativhub kann die Antriebsklinke 42 in einen nachfolgenden Zahnzwischenraum in der Umfangsverzahnung des Antriebsritzels 20 springen und bei einem Öffnen der Reibungskupplung 10 das Antriebsritzel 20 und damit die drehfest mit dem Antriebsritzel 20 verbundene Spindel verdrehen, wodurch die die Verstelleinheit 22 entlang der Spindel 14 zum Verdrehen des Nachstellrings 26 bewegt werden kann. Mit Hilfe einer mit der Anpressplatte 16 verbundenen Antriebssperrklinke 48 kann eine Rückdrehung der Spindel 14 und des Antriebsritzels 20 entlang einer einer Nachstelldrehrichtung 50 entgegen gesetzten Rückstelldrehrichtung 52 vermieden werden. Das Sensierblech 46 kann mit Hilfe einer mit dem Kupplungsdeckel 36 verbundenen Vorspannfeder 54 mit einer zusätzlichen Federkraft vorgespannt werden, um eine hinreichend hohe Betätigungskraft zum Verdrehen der Spindel 14 aufbringen zu können.

### Bezugszeichenliste

- 10: Reibungskupplung
- 12: Nachstelleinrichtung
- 14: Spindel
- 16: Anpressplatte
- 18: Halter
- 20: Antriebsritzel
- 22: Verstelleinheit
- 24: Nachstellansatz
- 26: Nachstellring
- 28: Nachstellritzel
- 30: Nachstellhalter
- 32: Rückstellklinke
- 34: Halteelement
- 36: Kupplungsdeckel
- 38: Nachstellsperrklinke
- 40: Betätigungselement
- 42: Antriebsklinke
- 44: Antriebshalter
- 46: Sensierblech
- 48: Antriebssperrklinke
- 50: Nachstelldrehrichtung
- 52: Rückstelldrehrichtung
- 54: Vorspannfeder

## Patentansprüche

1. Nachstelleinrichtung für eine Reibungskupplung (10) eines Kraftfahrzeugs, mit einer drehbar gelagerten Spindel (14),
einem drehfest mit der Spindel (14) verbundenen Antriebsritzel (20) zum Verdrehen der Spindel (14) bei einem Eingriff in eine Umfangsverzahnung des Antriebsritzel (20) durch eine Antriebsklinke (42) und
einer von der Spindel (14) relativ zur Spindel (14) in axialer Richtung antreibbaren Verstelleinheit (22) zum Verdrehen eines Nachstellrings (26) zur Nachstellung eines verschließbedingten Fehlabstands zwischen einer Anpressplatte (16) und einer Gegenplatte der Reibungskupplung (10),
**dadurch gekennzeichnet, dass** die Verstelleinheit (22) ein von der Spindel (14) antreibbares Nachstellritzel (28) und ein in eine Umfangsverzahnung des Nachstellritzels (28) eingreifende Rückstellklinke (32) zur Rückdrehung des Nachstellritzels (28) entlang der Spindel (14) aufweist.

2. Nachstelleinrichtung nach Anspruch 1 **dadurch gekennzeichnet, dass** die Rückstellklinke (32) an der Spindel (14) und/oder an dem Nachstellritzel (28) relativ verdrehbar gelagert ist.

3. Nachstelleinrichtung nach Anspruch 1 oder 2 **dadurch gekennzeichnet, dass** die Rückstellklinke (32) ein Halteelement (34) zur Befestigung mit einem Kupplungsdeckel (36) der Reibungskupplung (10) aufweist.

4. Nachstelleinrichtung nach einem der Ansprüche 1 bis 3 **dadurch gekennzeichnet, dass** mit dem Nachstellritzel (28) ein Nachstellansatz (24) zur Befestigung mit dem Nachstellring (26) relativ verdrehbar verbunden ist, wobei der Nachstellansatz (24) von dem Nachstellritzel (28) in axialer Richtung zum Verdrehen des Nachstellrings (26) antreibbar ist.

5. Nachstelleinrichtung nach einem der Ansprüche 1 bis 4 **dadurch gekennzeichnet, dass** eine in die Umfangsverzahnung des Nachstellritzels (28) eingreifende Nachstellsperrklinke (38) zum Sperren einer Relativdrehung des Nachstellritzels (28) zur Spindel (14) bei einer Axialbewegung in Nachstellrichtung vorgesehen ist, wobei insbesondere sich die Nachstellsperrklinke (38) im Wesentlichen parallel zur Spindel (14) über den gesamten axialen Verstellweg des Nachstellritzels (28) erstreckt.

6. Nachstelleinrichtung nach einem der Ansprüche 1 bis 5 **dadurch gekennzeichnet, dass** die Spindel (14) gegen eine entgegen einer durch die Antriebsklinke (42) ausgelöste Nachstelldrehrichtung (50) weisende Rückstelldrehrichtung (52) gesichert ist, wobei insbesondere eine in die Umfangsverzahnung des Antriebsritzels (20) eingreifende Antriebssperrklinke (48) zum Sperren einer Drehung des Antriebsritzels (20) in die Rückstelldrehrichtung (52) vorgesehen ist.

7. Nachstelleinrichtung nach Anspruch 5 und 6 **dadurch gekennzeichnet, dass** die Nachstellsperrklinke (38) und die Antriebssperrklinke (48) einstückig ausgeführt sind.

8. Nachstelleinrichtung nach einem der Ansprüche 1 bis 7 **dadurch gekennzeichnet, dass** das Nachstellritzel (28) selbsthemmend von der Spindel (14) aufgenommen ist.

9. Nachstelleinrichtung nach einem der Ansprüche 1 bis 8 **dadurch gekennzeichnet, dass** das Nachstellritzel (28) eine von einer Zahnteilung des Antriebsritzels (20) verschiedene Zahnteilung aufweist, wobei insbesondere die Zahnteilung des Nachstellritzels (28) kleiner als die Zahnteilung des Antriebsritzels (20) ist.

10. Reibungskupplung, insbesondere zum Kuppeln einer Antriebswelle eines Kraftfahrzeugmotors mit mindestens einer Getriebeeingangswelle eines Kraftfahrzeuggetriebes, mit einer Gegenplatte, einer relativ zu der Gegenplatte verlagerbaren Anpressplatte (16) zum reibschlüssigen Verpressen einer Kupplungsscheibe zwischen der Gegenplatte und der Anpressplatte (16), einen mit der Gegenplatte verbundenen Kupplungsdeckel (36) zum Abdecken zumindest eines Teils der Reibungskupplung (10) und einer Nachstelleinrichtung (12) nach einem der Ansprüche 1 bis 9 zur Nachstellung eines verschließbedingten Fehlabstands zwischen der Anpressplatte (16) und der Gegenplatte, wobei insbesondere die Spindel (14) mit der Anpressplatte (16) und die Antriebsklinke (42) sowie die Rückstellklinke (32) mit dem Kupplungsdeckel (36) verbunden sind.

## Claims

1. Adjusting device for a friction clutch (10) of a motor vehicle, having a rotatably mounted spindle (14), a drive pinion (20) which is connected fixedly to the spindle (14) in order to rotate the spindle (14) in the case of an engagement into a circumferential toothing system of the drive pinion (20) by way of a drive pawl (42), and
an adjusting unit (22) which can be driven in the axial direction relative to the spindle (14) by the spindle (14) in order to rotate an adjusting ring (26) for adjusting a wear-induced faulty spacing between the pressure plate (16) and a counterplate of the friction clutch (10),
**characterized in that** the adjusting unit (22) has an adjusting pinion (28) which can be driven by the spindle (14) and a restoring pawl (32) which engages into a circumferential toothing system of the adjusting pinion (28) in order to wind back the adjusting pinion (28) along the spindle (14).

2. Adjusting device according to Claim 1, **characterized in that** the restoring pawl (32) is mounted on the spindle (14) and/or on the adjusting pinion (28) such that it can be rotated relative thereto.

3. Adjusting device according to Claim 1 or 2, **characterized in that** the restoring pawl (32) has a holding element (34) for fastening to a clutch cover (36) of the friction clutch (10).

4. Adjusting device according to one of Claims 1 to 3, **characterized in that** an adjusting attachment (24) for fastening to the adjusting ring (26) is connected to the adjusting pinion (28) such that it can be rotated relative thereto, it being possible for the adjusting attachment (24) to be driven by the adjusting pinion (28) in the axial direction in order to rotate the adjusting ring (26).

5. Adjusting device according to one of Claims 1 to 4, **characterized in that** an adjusting locking pawl (38) which engages into the circumferential toothing system of the adjusting pinion (28) is provided for blocking a relative rotation of the adjusting pinion (28) with respect to the spindle (14) in the case of an axial movement in the adjusting direction, the adjusting locking pawl (38), in particular, extending substantially parallel to the spindle (14) over the entire axial adjustment travel of the adjusting pinion (28).

6. Adjusting device according to one of Claims 1 to 5, **characterized in that** the spindle (14) is secured against a restoring rotational direction (52) which points counter to an adjusting rotational direction (50) which is triggered by way of the drive pawl (42), a drive locking pawl (48) which engages into the circumferential toothing system of the drive pinion (20) being provided, in particular, for blocking a rotation of the drive pinion (20) in the restoring rotational direction (52).

7. Adjusting device according to Claims 5 and 6, **characterized in that** the adjusting locking pawl (38) and the drive locking pawl (48) are configured in one piece.

8. Adjusting device according to one of Claims 1 to 7, **characterized in that** the adjusting pinion (28) is received by the spindle (14) in a self-locking manner.

9. Adjusting device according to one of Claims 1 to 8, **characterized in that** the adjusting pinion (28) has a tooth spacing which is different from a tooth spacing of the drive pinion (20), the tooth spacing of the adjusting pinion (28) being, in particular, smaller than the tooth spacing of the drive pinion (20).

10. Friction clutch, in particular for coupling a drive shaft of a motor vehicle engine to at least one transmission input shaft of a motor vehicle transmission, having a counterplate, a pressure plate (16) which can be displaced relative to the counterplate for pressing a clutch plate in a frictionally locking manner between the counterplate and the pressure plate (16), a clutch cover (36) which is connected to the counterplate for covering at least part of the friction clutch (10), and an adjusting device (12) according to one of Claims 1 to 9 for adjusting a wear-induced faulty spacing between the pressure plate (16) and the counterplate, the spindle (14), in particular, being connected to the pressure plate (16), and the drive pawl (42) and the restoring pawl (32) being connected to the clutch cover (36).

## Revendications

1. Dispositif de réglage pour un embrayage à friction (10) d'un véhicule automobile, avec :
un axe (14) disposé de façon à pouvoir tourner ;
un pignon d'entraînement (20) relié solidairement en rotation à l'axe (14) pour faire tourner l'axe (14) en cas d'engrenage dans un endentement périphérique du pignon d'entraînement (20) par le biais d'un cliquet d'entraînement (42) ; et
une unité de réglage (22) pouvant être entraînée par l'axe (14), par rapport à l'axe (14), dans la direction axiale pour faire tourner une bague de réglage (26) afin de régler un mauvais écartement à la fermeture entre une plaque de compression (16) et une contre-plaque de l'embrayage à friction (10) ;
**caractérisé en ce que** l'unité de réglage (22) comporte un pignon de réglage (28) pouvant être entraîné par l'axe (14) et un cliquet de rappel (32) s'engrenant dans un endentement périphérique du pignon de réglage (28) pour faire pivoter en arrière le pignon de réglage (28) le long de l'axe (14).

2. Dispositif de réglage selon la revendication 1, **caractérisé en ce que** le cliquet de rappel (32) est disposé de façon à pouvoir tourner de façon relative au niveau de l'axe (14) et/ou du pignon de réglage (28).

3. Dispositif de réglage selon la revendication 1 ou 2, **caractérisé en ce que** le cliquet de rappel (32) comporte un élément d'arrêt (34) à fixer à un cache d'embrayage (36) de l'embrayage à friction (10).

4. Dispositif de réglage selon l'une quelconque des revendications 1 à 3, **caractérisé en ce qu'**un appendice de réglage (24) est relié au pignon de réglage (28) de façon à pouvoir tourner de façon relative pour réaliser la fixation à la bague de réglage (26), l'appendice de réglage (24) étant entraîné par le pignon de réglage (28) dans la direction axiale pour faire tourner la bague de réglage (26).

5. Dispositif de réglage selon l'une quelconque des revendications 1 à 4, **caractérisé en ce qu'**un cliquet de verrouillage de réglage (38) s'engrenant dans l'endentement périphérique du pignon de réglage (28) est prévu pour verrouiller une rotation relative du pignon de réglage (28) par rapport à l'axe (14) en cas de mouvement axial dans la direction de réglage, le cliquet de verrouillage de réglage (38) s'étendant notamment pour l'essentiel parallèlement à l'axe (14) sur la totalité de la course de réglage axial du pignon de réglage (28).

6. Dispositif de réglage selon l'une quelconque des revendications 1 à 5, **caractérisé en ce que** l'axe (14) est sécurisé contre une direction de rotation de rappel (52) orientée à l'encontre d'une direction de rotation de réglage (50) déclenchée par le cliquet d'entraînement (42), un cliquet de verrouillage d'entraînement (48) s'engrenant dans l'endentement périphérique du pignon d'entraînement (20) étant notamment prévu pour verrouiller une rotation du pignon d'entraînement (20) dans une direction de rotation de rappel (52).

7. Dispositif de réglage selon la revendication 5 et 6, **caractérisé en ce que** le cliquet de verrouillage de réglage (38) et le cliquet de verrouillage d'entraînement (48) sont réalisés d'un seul tenant.

8. Dispositif de réglage selon l'une quelconque des revendications 1 à 7, **caractérisé en ce que** le pignon de réglage (28) est logé de façon autobloquante par l'axe (14).

9. Dispositif de réglage selon l'une quelconque des revendications 1 à 8, **caractérisé en ce que** le pignon de réglage (28) comporte une séparation de dent différente d'une séparation de dent du pignon d'entraînement (20), la séparation de dent du pignon de réglage (28) étant notamment inférieure à la séparation de dent du pignon d'entraînement (20).

10. Embrayage à friction, notamment pour embrayer un arbre d'entraînement d'un moteur de véhicule automobile avec au moins un arbre d'entrée de boîte de vitesses d'une boîte de vitesses de véhicule automobile, avec une contre-plaque, une plaque de compression (16) pouvant être déplacée par rapport à la contre-plaque pour comprimer par complémentarité de frottements un disque d'embrayage entre la contre-plaque et la plaque de compression (16), un cache d'embrayage (36) relié à la contre-plaque pour recouvrir au moins une partie de l'embrayage à friction (10) et un dispositif de réglage (12) selon l'une quelconque des revendications 1 à 9, pour régler un mauvais écartement à la fermeture entre la plaque de compression (16) et la contre-plaque, l'axe (14) étant notamment relié à la plaque de compression (16) et le cliquet d'entraînement (42) ainsi que le cliquet de rappel (32) au cache d'embrayage (36).
